# EUROPEAN PATENT APPLICATION

(11) **EP 4 521 292 A1**
(43) Date of publication of application: **12.03.2025**
(21) Application number: 23799299.5
(22) Date of filing: 05.05.2023
(51) Int. Cl.: G06F 40/166, G06F 16/683

(54) **AUDIO EDITING METHOD AND APPARATUS, DEVICE, AND STORAGE MEDIUM**

(30) Priority: 06.05.2022 CN 202210488246
(71) Applicant: BEIJING BYTEDANCE NETWORK TECHNOLOGY CO., LTD., Beijing 100041 (CN)
(72) Inventor: ZHENG, Weiming, Beijing 100028 (CN); WANG, Jinjin, Beijing 100028 (CN); HUANG, Pan, Beijing 100028 (CN); CHU, Shuting, Beijing 100028 (CN)
(74) Representative: Dentons UK and Middle East LLP
(86) International application number: PCT/CN2023/092386
(87) International publication number: WO 2023/213313

(57) **Abstract**

According to embodiments of the present disclosure, a method and an apparatus for audio editing, a device and a storage medium are provided. The method audio editing includes highlighting one or more invalid characters contained in a text corresponding to an audio in a predefined mode for the audio. The method also includes detecting a deletion confirmation indication for at least one target invalid character among the one or more invalid characters; and in response to detecting the deletion confirmation indication, deleting at least one audio segment corresponding to the at least one target invalid character from the audio.

## Description

This application claims the priority of Chinese Patent Application No. 202210488246.2, entitled "METHOD AND APPARATUS FOR AUDIO EDITING, DEVICE, AND STORAGE MEDIUM" filed on May 6, 2022.

### FIELD

Example embodiments of the present disclosure generally relate to the field of computer and, in particular, to a method and an apparatus for audio editing, a device, and a computer-readable storage media.

### BACKGROUND

Audio data is a common information interaction manner in various aspects such as people's life, work, and society. Currently, people can produce and obtain audio data more and more conveniently and also share the recorded audio. In order to provide audios with higher quality, it is desired to perform various edition operations on the audio data, including adjusting volume, speed, timbre, etc. In some cases, it is also desired to provide the capability of deleting unwanted words occurred in the audio data.

### SUMMARY

According to example embodiments of the present disclosure, a solution for audio editing is provided.

**In** a first aspect of the present disclosure, a method for audio editing is provided. The method includes highlighting one or more invalid characters contained in a text corresponding to an audio in a predefined mode for the audio; detecting a deletion confirmation indication for at least one target invalid character among the one or more invalid characters; and in response to detecting the deletion confirmation indication, deleting at least one audio segment corresponding to the at least one target invalid character from the audio.

In a second aspect of the present disclosure, an apparatus for audio editing is provided. The apparatus includes: a highlighting module configured to highlight one or more invalid characters contained in a text corresponding to an audio in a predefined mode for the audio; an indication detecting module configured to detect a deletion confirmation indication for at least one target invalid character among the one or more invalid characters; and an audio deleting module configured to delete, in response to detecting the deletion confirmation indication, at least one audio segment corresponding to the at least one target invalid character from the audio.

In a third aspect of the present disclosure, an electronic device is provided. The device includes at least one processing unit; and at least one memory coupled to the at least one processing unit and storing instructions for execution by the at least one processing unit. The instructions, when executed by the at least one processing unit, cause the device to implement the method of the first aspect.

In a fourth aspect of the present disclosure, a computer-readable storage medium is provided. The medium stores a computer program thereon, and the computer program is executable by the processor to implement the method of the first aspect.

It should be appreciated that the content described in this section is not intended to limit critical features or essential features of the embodiments of the disclosure, nor is it intended to limit the scope of the disclosure. Other features of the present disclosure will become readily appreciated from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein:
FIG. 1 illustrates a schematic diagram of an example environment in which embodiments of the present disclosure can be implemented;
FIG. 2 illustrates a flowchart of a process for audio editing according to some embodiments of the present disclosure;
FIG. 3A to FIG. 3F are schematic diagrams illustrating an interaction example of an edit page for audio editing according to some embodiments of the present disclosure;
FIG. 4 illustrates a flowchart of a process for highlighting an invalid character according to some embodiments of the present disclosure;
FIG. 5 illustrates a flowchart of a process for highlighting an invalid character according to some other embodiments of the present disclosure;
FIGS. 6A-6F illustrate schematic diagrams of example user selection for an invalid character in an edit page according to some embodiments of the present disclosure;
FIGS. 7A-7B illustrate schematic diagrams of example page presentations for editing audio according to some embodiments of the present disclosure;
FIG. 8 illustrates a block diagram of an apparatus for audio editing according to some embodiments of the present disclosure; and
FIG. 9 illustrates a block diagram of a device capable of implementing various embodiments of the present disclosure.

### DETAILED DESCRIPTION

Embodiments of the present disclosure will be described in more detail below with reference to the accompanying drawings. Although some embodiments of the present disclosure are shown in the drawings, it shall be understood that the present disclosure can be implemented in various forms and should not be construed as limitations to the embodiments set forth herein. On the contrary, these embodiments are provided for a more thorough and complete understanding of the present disclosure. It shall be understood that the drawings and embodiments of the present disclosure are provided for the illustrative purpose only and are not intended to limit the scope of protection of the present disclosure.

In the description of the embodiments of the present disclosure, the term "including" and the like should be understood as non-exclusive inclusion, that is, "including but not limited to". The term "based on" should be understood as "based at least in part on. " The term "one embodiment" or "the embodiment" should be understood as "at least one embodiment". The term "some embodiments" should be understood as "at least some embodiments". Other explicit and implicit definitions may also be included below.

It will be appreciated that the data involved in the technical solution (including but not limited to the data itself, the obtaining or use of the data) should comply with the requirements of the corresponding legal regulations and related provisions.

It will be appreciated that, before using the technical solutions disclosed in the various embodiments of the present disclosure, the user shall be informed of the type, application scope, and application scenario of the personal information involved in this disclosure in an appropriate manner and the user's authorization shall be obtained, in accordance with relevant laws and regulations.

For example, in response to receiving an active request from a user, prompt information is sent to the user to explicitly prompt the user that an operation requested by the user will require obtaining and use of personal information of the user. Thus, the user can autonomously select, according to the prompt information, whether to provide personal information to software or hardware such as an electronic device, an application program, a server, or a storage medium that executes the operations of the technical solutions of the present disclosure.

As an optional but non-limiting implementation, in response to receiving an active request from the user, prompt information is sent to the user, for example, in the form of a pop-up window, and the pop-up window may present the prompt information in the form of text. In addition, the pop-up window may also carry a selection control for the user to select whether he/she "agrees" or "disagrees" to provide personal information to the electronic device.

It will be appreciated that the above notification and user authorization process are only illustrative which do not limit the implementation of this disclosure. Other methods that meet relevant laws and regulations can also be applied to the implementation of this disclosure.

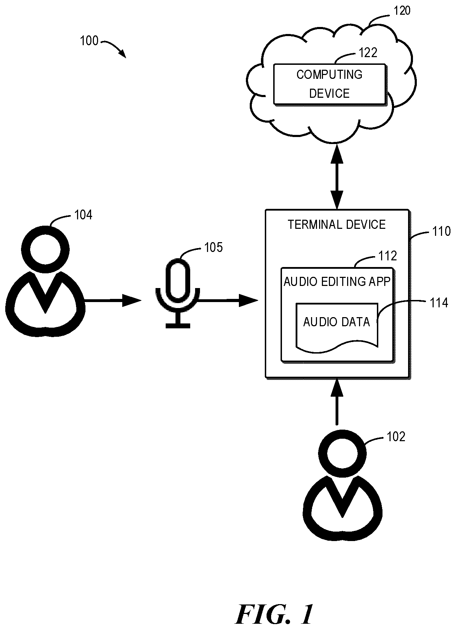

FIG. 1 illustrates a schematic diagram of an example environment 100 in which embodiments of the present disclosure can be implemented. In this example environment 100, an audio editing application 112 may be installed in a terminal device 110 to edit an audio 114. For example, the audio editing application 112 may edit the audio 114 by an operation based on a user 102. Herein, the audio 114 to be edited may be of any audio format and may have any suitable audio length. As an example, the audio 114 may be a podcast, audio corresponding to a short video, a radio drama, an audiobook, a recording of a conference or interview, an audio lesson, a recorded note, or the like.

In some embodiments, the audio 114 may be captured by an audio capture device 105 (e.g., a device with a microphone) and provided to the audio editing application 112 for editing. For example, the audio capture device 105 may capture an audio at least from the user 104. In some embodiments, the audio editing application 112 may provide an audio recording function for recording audio 114 captured via the audio capture device 105. In some embodiments, the audio 114 edited by the audio editing application 112 may be from any other data source, such as the audio may be audio 114 that downloaded or received from other devices. Embodiments of the present disclosure are not limited in this respect.

It will be appreciated that while the user 102 who edits the audio 114 and the user 104 who outputs the audio 114 are shown, these users may be the same user, which is not limited herein. It is also understood that while shown as separate devices, the audio capture device 105 may be integrated with the terminal device 110. In other implementations, the audio capture device 105 may otherwise be communicatively coupled with the terminal device 110 to provide the captured audio 114.

The terminal device 110 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera / camcorder, a positioning device, a television receiver, a radio broadcast receiver, an electronic book device, a gaming device, or any combination of the foregoing, including accessories and peripherals of these devices, or any combination thereof. In some embodiments, the terminal device 110 can also support any type of interface for a user (such as a "wearable" circuit, etc.).

In some embodiments, the terminal device 110 may communicate with a remote computing device 122 to enable editing of the audio 114. For example, the computing device 122 may provide storage functions, specific analysis tasks, and the like for the audio 114, to extend storage and processing capabilities of the terminal device 110. The computing device 122 may be various types of computing systems/servers capable of providing computing power, including, but not limited to, mainframes, edge computing nodes, computing devices in a cloud environment, and so forth. In the example shown in FIG. 1, the computing device 122 may be deployed in the cloud environment 120.

It shall be understood that the structure and function of the environment 100 is described for exemplary purposes only, which does not imply any limitation to the scope of the present disclosure. For example, the terminal device 110 may not communicate with the remote computing device 122. For another example, the user 104 and the audio collection device 105 may also be omitted, and the like.

In an audio editing scenario, it is sometimes desirable to be able to delete words or phrases that are not expected to appear in audio, such as words or phrases that may be meaningless or useless for expressions in the audio. Herein, such words or phrases may be referred to as "invalid characters," sometimes also referred to as "invalid words", "useless words", "fake words" or "waste words", where the "invalid character" may be a text unit of any size, such as a single character, word, or phrase, which may have different sizes in different natural languages. In some embodiments, invalid characters may include modal particles, pet phrases, and the like that appear in spoken expressions, such as characters "ah", "yah", "eh", "oh", "huh", "the", etc., and these meaningless words are considered as invalid expressions. In some embodiments, invalid characters may Alternatively, or in addition be other words or phrases appearing in the audio, such as sensitive words. The sensitive words that are not expected to appear may be different in different application scenarios, which may be determined as needed.

In a conventional solution, in order to delete words or phrases that are not expected to appear in the audio, the audio editor needs to repeatedly listen to the audio, so as to find and accurately locate the words or phrases to be deleted, and select and delete the corresponding audio segments. Such an editing process is inefficient and problems such as deletion, missing deletion, and deletion by mistake (for example, the deleted audio segment is too long or short) may easily occur.

According to embodiments of the present disclosure, an improved audio editing solution is provided. In this solution, one or more invalid characters existing in a text corresponding to the audio are determined and highlighted based on the text, so that the user can select and confirm whether to delete a certain invalid character or some invalid characters therein. After detecting a deletion confirmation indication for an invalid character, an audio segment corresponding to the invalid character that is confirmed to be deleted is automatically deleted from the audio.

The solution can support convenient deletion of invalid characters in the audio, and thus the audio editing efficiency is significantly improved. From the perspective of the user, one-key recognition and deletion for invalid characters can be realized, redundant operations are avoided, and time for audio editing is saved. By highlighting potentially invalid characters for the user, it may effectively prevent accidental deletions or oversights in the deletion process.

Some example embodiments of the present disclosure will be described below with continued reference to the accompanying drawings.

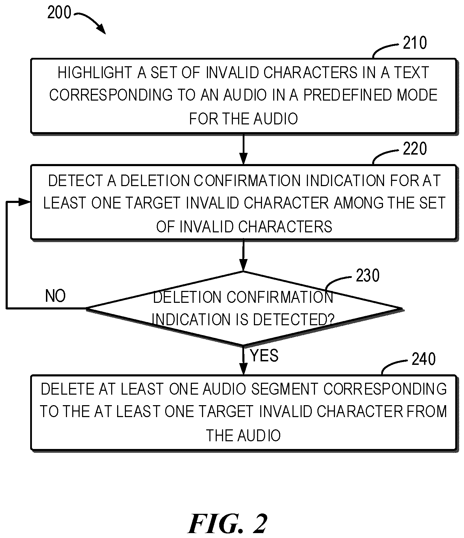

FIG. 2 shows a flowchart of a process 200 for audio editing according to some embodiments of the present disclosure. The process 200 may be implemented at the terminal device 110. For ease of discussion, the process 200 will be described with reference to the environment 100 of FIG. 1.

At block 210, the terminal device 110 highlights a set of invalid characters in a text corresponding to the audio 114 in a predefined mode for the audio.

In embodiments of the present disclosure, corresponding text is recognized from the audio 114 for assisting in editing the audio 114. In some embodiments, automatic speech recognition (ASR) technology may be utilized to recognize the corresponding text from the audio 114. Recognition of text may be performed at the terminal device 110. In other embodiments, the recognition of text may be performed by a remote computing device, such as the computing device 122 in environment 100, and the terminal device 110 may receive the text from the computing device 122.

In an embodiment of the present disclosure, a predefined mode is provided in which a set of invalid characters in the text may be located and highlighted, and the set of invalid characters includes one or more invalid characters. Hereinafter, for ease of discussion, this predefined mode is referred to herein as an "invalid character locating mode". In some embodiments, the invalid character locating mode may be entered in response to a user selection.

In an embodiment of the present disclosure, the highlighted invalid characters are determined based on text. In some embodiments, the highlighted invalid characters may include one or more invalid characters automatically recognized from the text. Automatic recognition of invalid characters can save time of a user in recognizing invalid characters. In particular, as compared with positioning invalid characters by auditioning an audio, automatic recognition may prompt the user of the presence of invalid characters more quickly. In this way, after triggering to enter the invalid character locating mode, invalid characters recognized from the text can be automatically and quickly highlighted.

In some other embodiments described below, the highlighted invalid characters may Alternatively, or in addition include one or more invalid characters determined based on the user selection. For example, a user may be allowed to select one or more characters from the presented text as invalid characters. A user may more easily and accurately recognize invalid characters in text, as compared with positioning invalid characters by auditioning an audio.

In some embodiments, automatic recognition of invalid characters may be performed at the terminal device 110. In other embodiments, automatic recognition of invalid characters may be performed by a remote computing device, such as the computing device 122 in the environment 100, and the terminal device 110 may obtain a set of the automatically recognized invalid characters from the computing device 122.

Various methods may be utilized to automatically recognize invalid characters in the text. In some embodiments, an invalid character list may be pre-created and maintained, with common invalid characters being recorded, such as characters "ah", "yah", "eh", "oh", "huh", "the", etc., and/or other words or phrases that are not expected to appear in the audio, such as sensitive words. By matching each character in the text corresponding to the audio 114 with the invalid character list, invalid characters included in the text may be determined. It shall be understood that only non-limiting examples of invalid characters are listed herein, more, fewer, or other invalid characters may also be recorded in the invalid character list under different languages and application scenarios.

Alternatively or additionally, in some embodiments, an invalid character recognition model may be constructed and trained, and the invalid character recognition model is configured to be capable of recognizing invalid characters from the input text. Such an invalid character recognition model may be constructed and trained based on various machine learning or deep learning algorithms. The input of the invalid character recognition model may include text, and the output includes a recognition result. The recognition result may indicate whether an invalid character exists in the text and, if present, the recognition result may include an indication of the recognized invalid character.

The training data for training such an invalid character recognition model may include sample text, and may also include labeling information for the invalid characters in the sample text. In addition, the invalid character recognition model may be constructed using a machine learning or deep learning model suitable for text processing, and the model may be trained by using a suitable training algorithm for machine learning or deep learning. The structure and the training process of the invalid character recognition model are not specifically limited in the embodiments of the present disclosure.

It may be understood that the recognition of invalid characters may be performed locally at the terminal device 110 or at the remote computing device 122 based on the invalid character list or the invalid character recognition model. In some embodiments, the recognition of invalid characters may start to be executed after receiving a trigger operation for entering the invalid character locating mode. In some embodiments, the recognition of invalid characters may be performed asynchronously, for example, the terminal device 110 or the computing device 112 may recognize a set of invalid characters from the text corresponding to the audio 114 after obtaining the audio 114, and then record the recognized invalid characters. After the invalid character locating mode is subsequently entered, the previously recognized invalid characters may be quickly highlighted.

In some embodiments, edition to the audio 114 may be performed at audio editing application 112, including deletion of an audio segment corresponding to the invalid character. For example, the audio editing application 112 may provide an edit page for the audio 114. The audio editing application 112 may provide an invalid character locating mode. When in the invalid character locating mode, a set of invalid characters in the text may be highlighted in the edit page. In some embodiments, the text may be presented in an edit page and a set of invalid characters may be highlighted in the presentation of the text.

The highlighting of invalid characters refers to the display of invalid characters being different from that of other characters in text. One or more highlighting manners may be used to achieve the highlighting of invalid characters. As an example, a highlighting manner may include increasing a deletion line for invalid characters (i.e., drawing a line in the middle of a character) or underlining the invalid characters, changing a format (e.g., color, font size, font, and/or thickness, etc.) of the invalid characters to distinguish them from other characters, superimposing shadings of a specific color or shape on the invalid characters, adding special shapes or labeling on the invalid characters, or any other way of highlighting invalid characters.

In some embodiments, if other characters in the text are presented at the same time, the presentation manner for other characters other than the invalid characters may be changed, so that invalid characters may be highlighted. For example, the format (e.g., color, font size, font and/or thickness, etc.) of other characters may be changed, and other characters may be hidden or at least partially hidden, and so on.

In some embodiments, the invalid characters may be highlighted in a single manner, such as only adding a deletion line to the invalid characters. In some embodiments, a plurality of highlighting manners may be superimposed on the invalid characters at the same time, for example, a deletion line and a shading with a specific color are added to the invalid characters at the same time.

The manner for highlighting the invalid characters may be selected according to actual application requirements. The embodiments of the present disclosure are not limited in the manner of highlighting.

For better understanding some embodiments of the present disclosure, reference will be further discussed below with reference to a diagram user interface diagram.

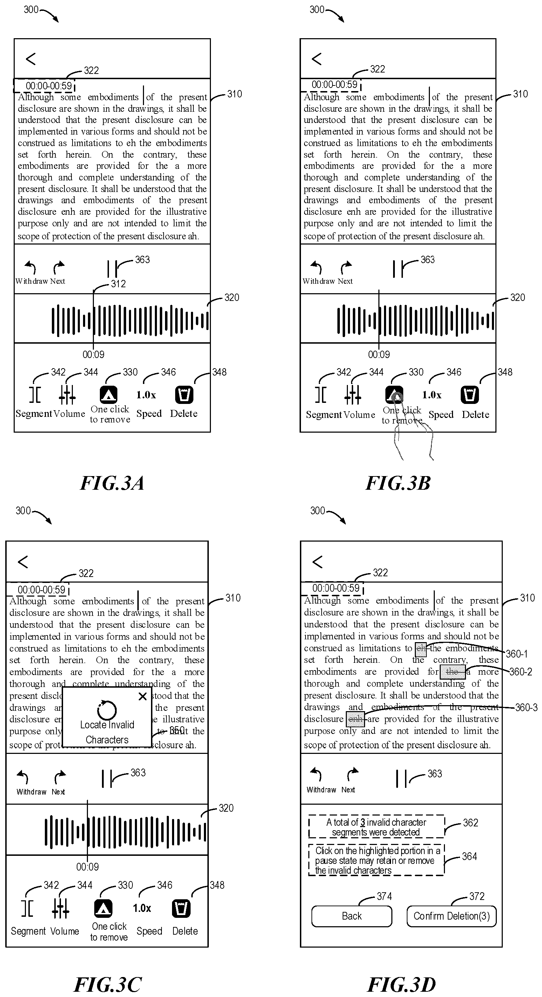

FIG. 3A illustrates a schematic diagram of an interaction example of an edit page 300 for audio editing according to some embodiments of the present disclosure. It shall be understood that the pages shown in FIG. 3A and the pages in other figures described below are merely examples, and various page designs may exist. Respective graphical elements in a page may have different arrangements and different visual representations, one or more of which may be omitted or replaced, and one or more other elements may be additionally presented. Embodiments of the present disclosure are not limited in this respect.

In an edit page 300, content corresponding to the audio 114 is presented in a page area 310. For purposes of explanation, specific text is presented in the drawings, but such text does not constitute any limitation on the embodiments of the present disclosure. The edit page 300 may also be presented with audio information associated with the audio 114 (also referred to as association information of the audio 114), including sound wave representation information 320 and time length information 322 of the audio 114. In other embodiments, one or more pieces of the audio information may also not be presented.

one or more selectable editing functions is also provided in the edit page 300. In the example of FIG. 3A, a function 330 labeled with text "One-click to remove fake words" indicates a function for entering an invalid character locating mode. FIG. 3A also shows other example editing functions, including a segmentation function 342 for segmenting the audio 114 into one or more audio segments, a volume adjustment function 344 for adjusting volume of the audio 114, a speed adjustment function 346 for adjusting a speed of the audio 114, and a deletion function 348 for deleting one or more audio segments of the audio 114. The edit page 300 is also presented with a play identifier 363 indicating that the audio is playing. In some implementations, the user may position a starting playback position of the audio by positioning a certain character or certain characters in the text, or by dragging the progress control bar 312.

It shall be understood that text labeling for the function 330 and other illustrated editing functions are examples. The edit page 300 may provide more, fewer, or other editing functions.

In response to detecting a user selection for the function 330, e.g., detecting a user's click selection for the function 330 in FIG. 3B, the terminal device 110 or the audio editing application 112 enters an invalid character locating mode. Note that for purposes of explanation, in FIG. 3B and in subsequent embodiments, the user selection based on touch gestures is illustrated. It should be understood, however, that other ways for implement user selections may exist, such as mouse selection, voice control, and the like, depending on capabilities of the terminal device 110.

In some embodiments, when switching to the invalid character locating mode, the terminal device 110 may determine and position invalid characters in the text presented by the page area 310. As previously described, the recognition of invalid characters may be performed locally at the terminal device 110 or at the remote computing device 112, and may be performed after triggering to enter the invalid character locating mode or may be performed in advance.

In some examples, as shown in FIG. 3C, a positioning waiting indication 350 may be provided to indicate that invalid characters are being positioned in the page area 310. In some cases, the recognition of invalid characters may take some time, or the positioning and rendering of invalid characters in the edit page 300 may also take some time. The positioning waiting indication 350 may prompt the user of the current operation of the terminal device 110.

After the invalid characters are determined, as shown in FIG. 3D, the invalid character 360-1 "eh", the invalid character 360-2 "the" and the invalid character 360-3 "enh" are highlighted in the page area 310. In this example, the invalid characters are highlighted by adding deletion lines and color shading.

In some embodiments, in addition to highlighting invalid characters, additional information of the invalid characters may be presented. The additional information may at least include the number of the highlighted invalid characters. As shown in FIG. 3D, a text indication 362 for the number of the highlighted invalid characters may be presented on the edit page 300, and the number of invalid characters (e.g., the number "3") is also displayed on the "Confirm Deletion" option 372. Such a presentation may enable a user to quickly know the total number of invalid characters in the text, which is particularly useful if the text is longer or if the number of recognized invalid characters is larger. In some embodiments, the number of invalid characters presented may be dynamically modified as the user continuously selects new invalid characters and/or deselects the invalid characters, as will be discussed further below.

By highlighting the invalid characters, the user may accurately know the characters that may be deleted, and may further confirm whether to delete one or more of the invalid characters according to the editing requirements. Returning to the process 200 of FIG. 2, at block 220, the terminal device 110 detects a deletion confirmation indication for at least one target invalid character in the set of invalid characters. The at least one target invalid character refers to an invalid character that are confirmed to be deleted. In some embodiments, the deletion confirmation indication may be detected based on a user selection.

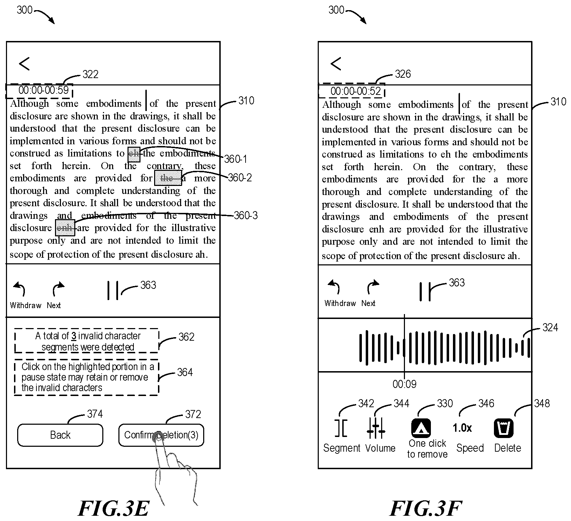

In some embodiments, a confirmation option for deletion of the invalid characters may be presented for user to select. For example, in an example of FIG. 3E, a "Confirm Deletion" option 372 is provided, the selection of this option may indicate triggering of the delete confirmation indication.

In some embodiments, the user may also selectively confirm the automatically recognized invalid characters, and/or may supplement more invalid characters, as will be discussed below.

If one or more highlighted characters are deemed as not being needed to be deleted, e.g., these characters are determined as "non-invalid characters" based on user selection, the remaining invalid characters may be determined as the target invalid characters to be deleted.

With continued reference to FIG. 2, at block 230, the terminal device 110 determines whether a deletion confirmation indication is detected. In response to detecting the deletion confirmation indication for the at least one target invalid character, at block 240, the terminal device 110 deletes at least one audio segment corresponding to the at least one target invalid character from the audio 114 to obtain the updated audio. If the deletion confirmation indication for the at least one target invalid character is not detected, the terminal device 110 may continue to wait.

In some embodiments, the terminal device 110 may determine, based on the correspondence in time between the audio 114 and the text, at least one audio segment in the audio 114 corresponding to the at least one target invalid character. The correspondence between the audio 114 and the text may indicate an audio segment corresponding to each text character or text string in the text, for example, the text may indicate timestamp information of the corresponding audio segment, including a start time and an end time. In this way, after the one or more target invalid characters to be deleted are determined, the timestamp information of the corresponding audio segments may be determined based on the correspondence, so that the audio segments are positioned in the audio 114.

After deleting the audio segments corresponding to the one or more target invalid characters from the audio 114, the updated audio may have a shorter time length. The previous and subsequent portions of the audio segment being deleted may be connected to compose the updated audio. In some embodiments, the updated audio itself may be stored locally by the terminal device 110 or stored remotely as a separate audio file.

In some embodiments, in addition to deleting the audio segment, the one or more recognized target invalid characters may be deleted from the text corresponding to the audio 114 to obtain the updated text corresponding to the updated audio. The updated text does not include the deleted target invalid characters. In some embodiments, the updated text may also be presented. In some embodiments, information associated with the updated audio (also referred to as association information) may also be presented, such as time length information and/or sound wave representation information. Since the audio is updated, the audio information may also be updated accordingly.

For example, when the user selects the "Confirm Deletion" option 372 of FIG. 3E, the currently highlighted invalid characters 360-1, 360-2, and 360-3 are confirmed as the target invalid characters. Therefore, the audio parts corresponding to these target invalid characters are deleted from the audio 114, and these target invalid characters are also deleted from the text. As shown in FIG. 3F, the updated text may be presented in the text area 310 of the edit page 300, where the target invalid characters are no longer presented.

In addition, the association information of the updated audio is also presented in the edit page 300 of FIG. 3F, such as the voiceprint representation information 324 and the time length information 326 shown in FIG. 3F. The updated association information enables the user to visually view the result of deleting invalid characters in the audio. After deleting the audio segments corresponding to the invalid characters, if the user selects to play the audio, the updated audio without the invalid characters can be heard.

As described above, the automatically recognized invalid characters are highlighted after entering the invalid character locating mode. Additionally, whether the automatically recognized invalid characters can be deleted may Alternatively, or in addition be selectively confirmed by the user, and/or other invalid characters may be selected by the user for deletion. Such embodiments will be discussed in detail below.

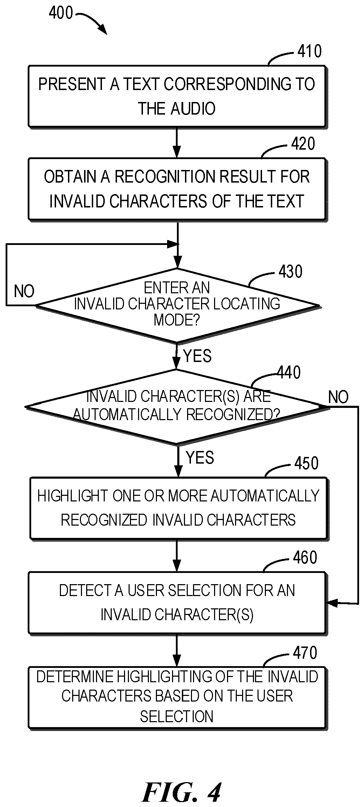

FIG. 4 illustrates a flowchart of a process 400 for highlighting invalid characters according to some embodiments of the present disclosure. The process 400 may be implemented at terminal device 110. The process 400 of FIG. 4 generally describes the display of invalid characters determined based on automatic recognition and user manual selection.

At block 410, the terminal device 110 presents a text corresponding to the audio 114, such as presentation of the text shown in FIG. 3A. At block 420, the terminal device 110 obtains a recognition result for invalid characters of the text. As described above, the terminal device 110 may perform recognition of invalid characters locally or directly receive a recognition result for invalid characters from a remote device. The recognition result for invalid characters may include a set of invalid characters recognized from the text, or may indicate that no invalid character is recognized in the text.

At block 430, the terminal device 110 detects whether an invalid character locating mode is entered. If entry to invalid character locating mode is not detected, the terminal device 110 may continue to wait. In response to detecting that the invalid character locating mode is entered, for example, the user selects a corresponding function presented in the edit page 300 in FIG. 3B, at block 440, the terminal device 110 determines, based on the recognition result for invalid character, whether an invalid character is automatically recognized.

If there is an automatically recognized invalid characters, at block 450, the terminal device 110 highlights a set of automatically recognized invalid characters. As shown in FIG. 3E, a set of invalid characters that are automatically recognized from the text can be displayed on the edit page 300.

If it is determined at block 440 that the character recognition result indicates no recognized invalid character, no character will be automatically highlighted after entering the invalid character locating mode. In this case, the process 400 proceeds to block 460 where the terminal device 110 detects a user selection for an invalid character(s) in the invalid character locating mode. For example, a user may be allowed to select a set of characters from the presented text as the invalid characters. In other words, in the invalid character locating mode, the highlighted invalid characters may include an invalid character determined based on the user selection.

In some embodiments, after highlighting the set of automatically recognized invalid characters at block 450, the process 400 may also proceed to block 460, and the terminal device 110 continues to detect a user selection for invalid characters in the invalid character locating mode. In this case, the user may be allowed to indicate that one or more recognized invalid characters should not be deleted and therefore are not taken as the target invalid characters. Alternatively, or in addition, in this case, the user may also be allowed to select one or more other characters as the invalid characters.

At block 470, the terminal device 110 determines highlighting of the invalid characters based on the user selection. Depending on the user's specific selection, some invalid characters may no longer be highlighted, and some additional invalid characters may be selected for highlighting.

In the process 400, block 460 and block 470 may be performed repeatedly until a deletion confirmation indication for a target invalid character is received. In response to the confirmation indication, the invalid characters currently still selected or highlighted may be determined as the target invalid characters to be deleted.

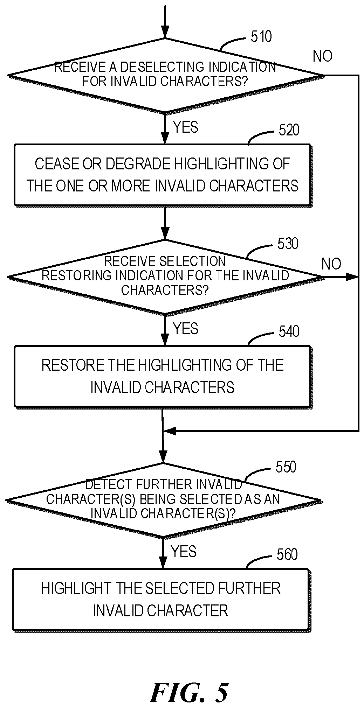

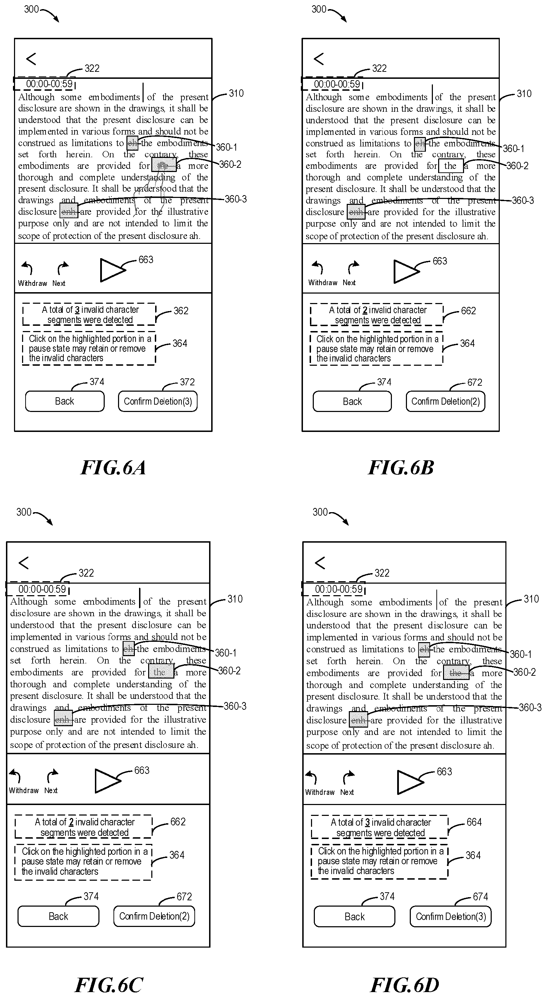

Example user selection for invalid characters and highlighting of invalid characters in the edit page will be discussed in detail below in conjunction with FIG. 5 and FIGS. 6A-6F.

FIG. 5 shows a flowchart of a process 500 for highlighting invalid characters according to some other embodiments of the present disclosure. The process 500 may be implemented at terminal device 110. The process 500 may be considered an example embodiment of blocks 460 and 470 in process 400. In the process 500, it is first assumed that one or more invalid characters have been highlighted. The currently highlighted invalid characters may include one or more invalid characters that are automatically recognized, and/or may include one or more invalid characters determined based on the user selection.

At block 510, the terminal device 110 determines whether a deselecting indication for one or more invalid characters is received. The deselecting indication may be determined based on a user selection. For example, for one or more highlighted invalid characters, the user may be allowed to deselect a certain invalid character or some invalid characters therein, respectively, so that the characters are no longer considered as invalid characters. As shown in FIG. 6A, invalid characters 360-1, 360-2, and 360-3 are highlighted in the edit page 300. If the user clicks on the invalid character 360-2 "the", the terminal device 110 receives a deselecting indication for the invalid character.

At block 520, in response to receiving the deselecting indication, the terminal device 110 stops or degrades highlighting of the one or more invalid characters that are deselected. In some embodiments, in response to the deselecting indication, the terminal device 110 may also remove the deselected one or more invalid characters from the set of invalid characters, meaning that the characters are no longer considered as the invalid characters.

In one embodiment, the terminal device 110 may cause the deselected one or more invalid characters to no longer be highlighted, and the presentation of these invalid characters will be the same as the presentation of other characters in the text. FIG. 6B illustrates an example of ceasing highlighting the deselected invalid characters. Specifically, after receiving the deselecting indication for the invalid character 360-2 in FIG. 6A, as shown in FIG. 6B, the character "that" is no longer highlighted.

In another embodiment, the terminal device 110 may degrade the highlighting of the deselected invalid characters, so that the highlighting degree of the deselected invalid character is lower than other invalid character that are not deselected. In some examples, the deselected invalid characters may still be highlighted as compared to other characters in the text to indicate to the user that these characters were determined to be invalid characters before (e.g., the automatically recognized invalid characters). Degrading the highlighting may include a way to cancel part of the highlighting (in the case that invalid characters are highlighted in a variety of ways), highlighting in different way (the highlighting degree is lower, such as taking a color with a lower degree of saturation as the shading, etc.), as well as any other way for degrading the presentation.

FIG. 6C illustrates degrading the highlighting of the deselected invalid characters. After receiving the deselecting indication for the invalid character 360-2 in FIG. 6A, as shown in FIG. 6C, the deletion line for invalid character 360-2 is cancelled, but color shading is still provided.

By providing a certain degree of highlighting for the deselected invalid characters, the user can conveniently position these invalid characters again in the event of the user's accidental operation.

As previously mentioned, if it is determined that one or more invalid characters are deselected, such as receiving a deselecting indication for one or more invalid characters, the number of invalid characters presented may be changed. For example, in the example of FIG. 6B and FIG. 6C, after the invalid character 360-2 is deselected, the text indication 662 may be presented on the edit page 300 to indicate the updated number of invalid characters. In addition, the number of invalid characters (e.g., number "2") may also be displayed on the "Confirm Deletion" option 672.

Returning to the process 530 of FIG. 5, the terminal device 110 determines whether a selection restoring indication for one or more invalid characters is received. If the selection restoring indication is received, the terminal device 110 restores the highlighting of the invalid characters from the stopped state or the degraded state at block 540.

As shown in FIG. 6C, the user may again conveniently locate and select invalid characters 360-2, as desired. As shown in FIG. 6D, if the user's re-selection for the invalid character 360 -2 is received, the invalid character 360-2 is restored to be highlighted as the same as other invalid characters. Certainly, in this case, different highlighting manners may also be used to indicate that the invalid character is the restored invalid character, which is not limited here.

In addition, after the invalid character 360-2 is re-selected, since the number of invalid characters is increased at this time, in the example of FIG. 6D, a text indication 664 for the updated number of invalid characters may also be presented on the edit page 300. In addition, the number of invalid characters (e.g., number "3") may also be displayed on the "Confirm Deletion" option 674.

In some embodiments, in various instances, the terminal device 110 may determine whether a further character(s) is detected as an invalid character(s) at block 550. For example, if the deselecting indication is detected at block 510, or the selection restoring indication is not detected at block 530, or after the highlighting of the invalid characters is restored, the terminal device 110 may continue to determine whether additional characters are detected as invalid characters. It shall be understood that although the steps of the blocks in the flowchart shown in FIG. 5 are described sequentially, the steps may be performed in different orders or in parallel. For example, the steps of blocks 510, 530, and 550 may be performed in parallel.

In the process of being in the invalid character locating mode, the terminal device 110 may determine whether one or more additional characters in the text are selected as invalid characters based on the user selection. For example, the user may be allowed to select one or more characters that are not highlighted in the text as invalid characters.

In response to detecting one or more further characters being selected as invalid characters, the terminal device 110 highlights the selected one or more further invalid characters at block 560.

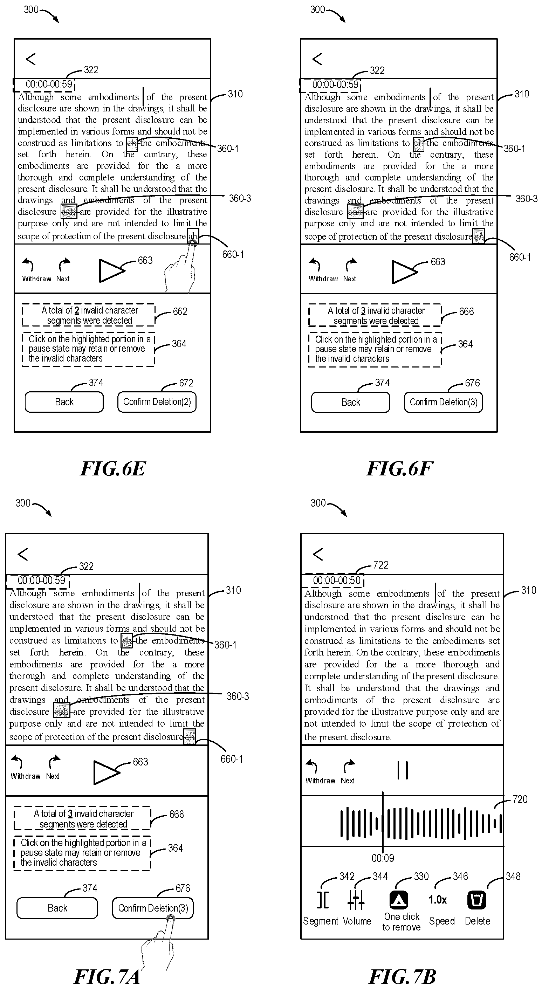

As shown in FIG. 6E, the user selects a character that is not highlighted in the text area 310, such as the character 660-1 "ah". The terminal device 110 detects such a user selection, and determines to select the character as an invalid character. As shown in FIG. 6F, the terminal device 110 highlights the character 660-1 in the edit page 300. In addition, since the number of invalid characters is increased from 2 to 3 at this time, the text indication 666 for the updated number of invalid characters may also be presented on the edit page 300. In addition, the number of invalid characters (e.g., the number "3") may also be displayed on the "Confirm Deletion" option 676.

In some embodiments, a user selection may be detected in a case that the audio 114 is not played, the user selection including deselecting, restoring the selection, and/or selecting additional invalid characters. In some examples, as shown in FIG. 3D and FIGS. 6A-6F, at the beginning of highlighting the invalid characters, the indication information 364 is presented on the edit page 300 to indicate to the user that the invalid characters can be retained or removed by clicking the highlight portion when the audio is in a pause state. As shown in FIG. 6A to FIG. 6F, the edit page 300 is presented with a pause playback identifier 663, indicating that the audio 114 is in a paused playback state.

If no additional character is detected as being selected as invalid characters at block 550, the terminal device 110 may determine that no additional invalid character is currently needed to be highlighted. During the invalid character locating mode, the terminal device 110 may perform detection of blocks 510, 530 and 550 for a plurality of times.

Regardless of whether the user further edits the invalid characters, after detecting the deletion confirmation indication, the invalid characters currently highlighted may be determined as the target invalid characters to be deleted, and the audio segments corresponding to the target invalid characters are deleted from the audio 114 based on the target invalid characters. As shown in FIG. 7A, when the user selects the "Confirm Deletion" option 372, the currently highlighted invalid characters 360-1, 360-3, and 660-1 are confirmed as the target invalid characters. Therefore, the audio segments corresponding to these target invalid characters are deleted from the audio 114, and these target invalid characters are also deleted from the text. As shown in FIG. 7B, the updated text may be presented in the text area 310 of the edit page 300, where the target invalid characters 360-1, 360-3, and 660-1 are no longer presented. In addition, the voiceprint representation information 720 and the time length information 722 associated with the updated audio may also be presented.

In some embodiments, in a case where the invalid characters selected and determined by the user to be deleted are obtained, the invalid characters selected based on the user and the text corresponding to the audio 114 may be provided to adjust the invalid character recognition model. For example, the character "ah" selected by the user and the text corresponding to the audio 114 in FIG. 6E and FIG. 6F may be provided to train the character recognition model. The character recognition model may be a model used by the terminal device 110 or the remote computing device 112 to automatically recognize invalid characters. The provided invalid character and the text corresponding to the audio 114 may enrich and expand the training data set of the invalid character recognition model, so that the invalid character recognition model can be evolved to have a stronger recognition capability.

In some embodiments, training of the invalid character recognition model may be restarted after enough additional training data is collected. In some embodiments, training of the invalid character model may be performed at the terminal device 110, at the computing device 112, or at other model training devices, which is not limited in the embodiments of the present disclosure.

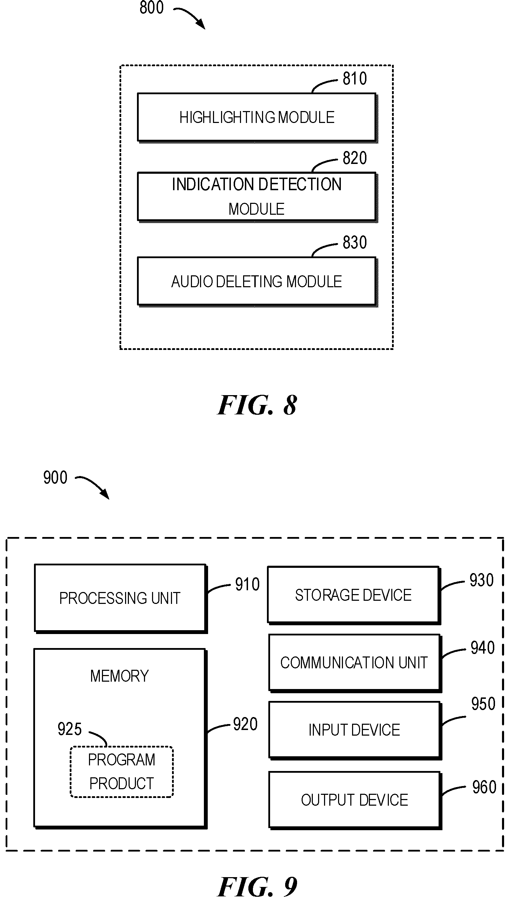

FIG. 8 shows a schematic structural block diagram of an apparatus 800 for audio editing according to some embodiments of the present disclosure. The apparatus 800 may be implemented or included in the terminal device 18. The various modules / components in the apparatus 800 may be implemented by hardware, software, firmware, or any combination thereof.

As shown, the apparatus 800 includes a highlighting module 810 configured to highlight one or more invalid characters contained in a text corresponding to an audio in a predefined mode for the audio. The apparatus 800 further includes an indication detecting module configured to detect a deletion confirmation indication for at least one target invalid character among the one or more invalid characters; and an audio deleting module 830 configured to delete, in response to detecting the deletion confirmation indication, at least one audio segment corresponding to the at least one target invalid character from the audio.

In some embodiments, the apparatus 800 further includes an invalid character recognizing module configured to recognize a first invalid character from the text.

In some embodiments, the apparatus 800 further includes an invalid character determining module configured to determine a second invalid character in the text based on a user input.

In some embodiments, the apparatus 800 further includes a data providing module configured to provide the second invalid character and the text for training an invalid character recognition model, the invalid character recognition model being trained to recognize an invalid character from an input text.

In some embodiments, the indication detection module includes an invalid character removing module configured to remove, in response to receiving a deselecting indication for a third invalid character among the one or more invalid characters, the third invalid character from the one or more invalid characters.

In some embodiments, the apparatus 800 further includes a highlighting ceasing or degrading module configured to cease or degrade, in response to receiving deselecting indication for a fourth invalid character among the one or more invalid characters, highlighting of the fourth invalid character.

In some embodiments, the apparatus 800 further includes a number presenting module configured to present a first number of the one or more invalid characters.

In some embodiments, the apparatus 800 further includes a number determining module configured to determine, in response to receiving a deselecting indication for at least one invalid character among the one or more invalid characters, a second number of invalid characters not being deselected among the one or more invalid characters; and a number modifying module configured to modify the presented first number to the second number.

In some embodiments, the apparatus 800 further includes a text determining module configured to delete, in response to detecting the deletion confirmation indication for the at least one target invalid character, the at least one target invalid character from the text to obtain an updated text; and a text presenting module configured to present the updated text.

In some embodiments, the apparatus 800 further includes an information module configured to association information of the audio after deleting the at least one audio segment, the association information including at least one of a duration or a sound wave representation.

FIG. 9 illustrates a block diagram of a computing device 900 in which one or more embodiments of the present disclosure may be implemented. It shall be understood that the computing device 900 shown in FIG. 9 is merely exemplary and should not constitute any limitation on the functionality and scope of the embodiments described herein. The computing device 900 shown in FIG. 9 may be used to implement the terminal device 110 of FIG. 1.

As shown in FIG. 9, the computing device 900 is in the form of a general-purpose computing device. Components of the computing device 900 may include, but are not limited to, one or more processors or processing units 910, a memory 920, a storage device 930, one or more communications units 940, one or more input devices 950, and one or more output devices 960. The processing unit 910 may be an actual or virtual processor and can perform various processes according to programs stored in the memory 920. In a multiprocessor system, a plurality of processing units execute computer executable instructions in parallel, so as to improve the parallel processing capability of the computing device 900.

The computing device 900 typically includes a number of computer storage media. Such media may be any available media that are accessible by the computing device 900, including, but not limited to, volatile and non-volatile media, removable and non-removable media. The memory 920 may be a volatile memory (e. g., a register, cache, random access memory (RAM)), non-volatile memory (e.g., read-only memory (ROM), electrically erasable programmable read-only memory (EEPROM), flash memory), or some combination thereof. The storage device 930 may be a removable or non-removable medium and may include a machine-readable medium such as a flash drive, a magnetic disk, or any other medium that can be used to store information and/or data (e. g., training data for training) and that can be accessed within the computing device 900.

The computing device 900 may further include additional removable/non-removable, volatile/nonvolatile storage media. Although not shown in FIG. 9, a magnetic disk drive for reading from or writing to a removable, nonvolatile magnetic disk such as a "floppy disk" and an optical disk drive for reading from or writing to a removable, nonvolatile optical disk may be provided. In these cases, each drive may be connected to a bus (not shown) by one or more data media interfaces. The memory 920 may include a computer program product 925 having one or more program modules configured to perform various methods or actions of various embodiments of the present disclosure.

The communication unit 940 implements communication with other computing devices through a communication medium. In addition, functions of components of the computing device 900 may be implemented by a single computing cluster or a plurality of computing machines, and these computing machines can communicate through a communication connection. Thus, the computing device 900 may operate in a networked environment using logical connections to one or more other servers, network personal computers (PCs), or another network node.

The input device 950 may be one or more input devices such as a mouse, keyboard, trackball, etc. The output device 960 may be one or more output devices such as a display, speaker, printer, etc. The computing device 900 may also communicate with one or more external devices (not shown) such as a storage device, a display device, or the like through the communication unit 940 as required, and communicate with one or more devices that enable a user to interact with the computing device 900, or communicate with any device (e. g., a network card, a modem, or the like) that enables the computing device 900 to communicate with one or more other computing devices. Such communication may be performed via an input/output (I/O) interface (not shown).

According to an exemplary implementation of the present disclosure, a computer readable storage medium is provided, on which a computer-executable instruction is stored, wherein the computer executable instruction is executed by a processor to implement the above-described method. According to an exemplary implementation of the present disclosure, there is also provided a computer program product, which is tangibly stored on a non-transitory computer readable medium and includes computer-executable instructions that are executed by a processor to implement the method described above.

Aspects of the present disclosure are described herein with reference to flowchart and/or block diagrams of methods, apparatus, devices and computer program products implemented in accordance with the present disclosure. It will be understood that each block of the flowcharts and/or block diagrams and combinations of blocks in the flowchart and/or block diagrams can be implemented by computer readable program instructions.

These computer readable program instructions may be provided to a processing unit of a general-purpose computer, special purpose computer, or other programmable data processing apparatus to produce a machine, such that the instructions, which execute via the processing unit of the computer or other programmable data processing apparatus, create means for implementing the functions/actions specified in one or more blocks of the flowchart and/or block diagrams. These computer readable program instructions may also be stored in a computer readable storage medium that can direct a computer, a programmable data processing apparatus, and/or other devices to function in a particular manner, such that the computer readable medium storing the instructions includes an article of manufacture including instructions which implement various aspects of the functions/actions specified in one or more blocks of the flowchart and/or block diagrams.

The computer readable program instructions may be loaded onto a computer, other programmable data processing apparatus, or other devices, causing a series of operational steps to be performed on a computer, other programmable data processing apparatus, or other devices, to produce a computer implemented process such that the instructions, when being executed on the computer, other programmable data processing apparatus, or other devices, implement the functions/actions specified in one or more blocks of the flowchart and/or block diagrams.

The flowcharts and block diagrams in the drawings illustrate the architecture, functionality, and operations of possible implementations of the systems, methods and computer program products according to various implementations of the present disclosure. In this regard, each block in the flowchart or block diagram may represent a module, segment, or portion of instructions which includes one or more executable instructions for implementing the specified logical function(s). In some alternative implementations, the functions marked in the blocks may occur in a different order than those marked in the drawings. For example, two consecutive blocks may actually be executed in parallel, or they may sometimes be executed in reverse order, depending on the function involved. It should also be noted that each block in the block diagrams and/or flowcharts, as well as combinations of blocks in the block diagrams and/or flowcharts, may be implemented using a dedicated hardware-based system that performs the specified function or operations, or may be implemented using a combination of dedicated hardware and computer instructions.

Various implementations of the disclosure have been described as above, the foregoing description is exemplary, not exhaustive, and the present application is not limited to the implementations as disclosed. Many modifications and variations will be apparent to those of ordinary skill in the art without departing from the scope and spirit of the implementations as described. The selection of terms used herein is intended to best explain the principles of the implementations, the practical application, or improvements to technologies in the marketplace, or to enable those skilled in the art to understand the implementations disclosed herein.

## Claims

1. A method for audio editing, comprising:
highlighting one or more invalid characters contained in a text corresponding to an audio in a predefined mode for the audio;
detecting a deletion confirmation indication for at least one target invalid character among the one or more invalid characters, and
in response to detecting the deletion confirmation indication, deleting at least one audio segment corresponding to the at least one target invalid character from the audio.

2. The method of claim 1, further comprising:
recognizing a first invalid character from the text.

3. The method of claim 1, further comprising:
determining a second invalid character in the text based on a user input.

4. The method of claim 3, further comprising:
providing the second invalid character and the text for training an invalid character recognition model, the invalid character recognition model being trained to recognize an invalid character from an input text.

5. The method of claim 1, wherein detecting the deletion confirmation indication comprises:
in response to receiving a deselecting indication for a third invalid character among the one or more invalid characters, removing the third invalid character from the one or more invalid characters.

6. The method of claim 1, further comprising:
in response to receiving a deselecting indication for a fourth invalid character among the one or more invalid characters, ceasing or degrading highlighting of the fourth invalid character.

7. The method of claim 1, further comprising:
presenting a first number of the one or more invalid characters.

8. The method of claim 7, further comprising:
in response to receiving a deselecting indication for at least one invalid character among the one or more invalid characters, determining a second number of invalid characters not being deselected among the one or more invalid characters, and
modifying the presented first number to the second number.

9. The method of claim 1, further comprising:
in response to detecting the deletion confirmation indication for the at least one target invalid character, deleting the at least one target invalid character from the text, to obtain an updated text; and
presenting the updated text.

10. The method of claim 1, further comprising:
presenting association information of the audio after deleting the at least one audio segment, the association information comprising at least one of a duration or a sound wave representation.

11. An apparatus for audio editing, comprising:
a highlighting module configured to highlight one or more invalid characters contained in a text corresponding to an audio in a predefined mode for the audio;
an indication detecting module configured to detect a deletion confirmation indication for at least one target invalid character among the one or more invalid characters; and
an audio deleting module configured to delete, in response to detecting the deletion confirmation indication, at least one audio segment corresponding to the at least one target invalid character from the audio.

12. The apparatus of claim 11, wherein the apparatus further comprises:
an invalid character recognizing module configured to recognize a first invalid character from the text.

13. The apparatus of claim 11, wherein the apparatus further comprises:
an invalid character determining module configured to determine a second invalid character in the text based on a user input.

14. The apparatus of claim 13, wherein the apparatus further comprises:
a data providing module configured to provide the second invalid character and the text for training an invalid character recognition model, the invalid character recognition model being trained to recognize an invalid character from an input text.

15. The apparatus of claim 11, wherein the indication detection module comprises:
an invalid character removing module configured to remove, in response to receiving a deselecting indication for a third invalid character among the one or more invalid characters, the third invalid character from the one or more invalid characters.

16. The apparatus of claim 11, wherein the apparatus further comprises:
a highlighting ceasing or degrading module configured to cease or degrade, in response to receiving deselecting indication for a fourth invalid character among the one or more invalid characters, highlighting of the fourth invalid character.

17. The apparatus of claim 11, wherein the apparatus further comprises:
a number presenting module configured to present a first number of the one or more invalid characters.

18. The apparatus of claim 11, wherein the apparatus further comprises:
a text determining module configured to delete, in response to detecting the deletion confirmation indication for the at least one target invalid character, the at least one target invalid character from the text, to obtain an updated text; and
a text presenting module configured to present the updated text.

19. An electronic device, comprising:
at least one processing unit; and
at least one memory coupled to the at least one processing unit and storing instructions for execution by the at least one processing unit, the instructions, when executed by the at least one processing unit, causing the device to implement the method of any of claims 1-9.

20. A computer-readable storage medium having a computer program stored thereon, the computer program being executable by a processor to implement the method of any of claims 1-9.
